# EUROPEAN PATENT SPECIFICATION

(11) **EP 3 657 376 B1**
(45) Date of publication and mention of the grant of the patent: **30.08.2023**
(21) Application number: 18834523.5
(22) Date of filing: 18.07.2018
(51) Int. Cl.: G06F 21/60, G06F 21/62, G06F 3/06, H04L 9/40

(54) **HYBRID-CLOUD DATA STORAGE METHOD AND APPARATUS, RELATED DEVICE, AND CLOUD SYSTEM**
HYBRIDES CLOUD-DATENSPEICHERVERFAHREN UND -GERÄT, ZUGEHÖRIGE VORRICHTUNG UND CLOUD-SYSTEM
APPAREIL ET PROCÉDÉ DE STOCKAGE DE DONNÉES EN NUAGE HYBRIDE, DISPOSITIF ASSOCIÉ, ET SYSTÈME EN NUAGE

(30) Priority: 19.07.2017 CN 201710591062
(43) Date of publication of application: 27.05.2020
(73) Proprietor: Tencent Technology (Shenzhen) Company Limited, Shenzhen, Guangdong, 518057 (CN)
(72) Inventor: SUN, Bin, Shenzhen Guangdong 518057 (CN); WANG, Jian, Shenzhen Guangdong 518057 (CN); LI, Jie, Shenzhen Guangdong 518057 (CN); WU, Xianbin, Shenzhen Guangdong 518057 (CN); QU, Yupeng, Shenzhen Guangdong 518057 (CN); WEI, Ailing, Shenzhen Guangdong 518057 (CN); CAI, Shu, Shenzhen Guangdong 518057 (CN); GONG, Youlan, Shenzhen Guangdong 518057 (CN); WANG, Lihu, Shenzhen Guangdong 518057 (CN)
(74) Representative: Gunzelmann, Rainer
(86) International application number: PCT/CN2018/096072
(87) International publication number: WO 2019/015598

(56) References cited:
- CN-A- 105 283 879
- CN-A- 106 100 824
- CN-A- 106 209 823
- CN-A- 107 330 337
- US-A1- 2010 332 401
- US-A1- 2015 365 382
- US-A1- 2016 330 177
- US-A1- 2017 026 355
- US-A1- 2017 104 736

## Description

### Field of the Technology

The present application relates to the technical field of data processing, and more particularly relates to a hybrid-cloud data storage method and apparatus, a related device and a cloud system.

### Background of the Disclosure

A hybrid cloud refers to a combination of a public cloud and a private cloud, and has become one of main modes and development directions of cloud computing. The public cloud is a computing resource provided by a public cloud service provider for all network users and is a cloud environment shared by all enterprises and users. The private cloud is a cloud environment exclusive to specific users for security. For example, for a private cloud built for an enterprise, resources in the private cloud are only available to internal users of the enterprise or specific external users related to the enterprise.
US20150365382A1 discloses a method and apparatus for enforcing storage encryption for data storage in a cloud. US20170104736A1 discloses secure data storage on a cloud environment. US20100332401A1 discloses that performing data storage operations with a cloud storage environment, including automatically selecting among multiple cloud storage sites.

### Summary

The present invention concerns a hybrid-cloud data storage method according to claim 1. Further aspects of the present invention are defined in the dependent claims. Embodiments of the present application provide a hybrid-cloud data storage method, which is executed by a gateway in a private cloud, wherein the method comprises:
a data storage instruction is received from a terminal device in the private cloud, wherein the data storage instruction includes data to be stored in a public cloud;
the data to be stored is acquired;
whether an encryption chip connected with the gateway or the gateway implements encryption is determined;
if the encryption is implemented by the encryption chip, data required to be encrypted in the data to be stored is determined to obtain first target data; the first target data is transmitted to the encryption chip to acquire a first encrypted data obtained after the encryption chip encrypts the first target data according to a first key; second target data including the first encrypted data is generated according to the first encrypted data;
a data segment corresponding to the second target data is generated according to the second target data;
the data segment corresponding to the second target data is transmitted to a public cloud for storage;
if the encryption is implemented by the gateway, the data to be stored is encrypted according to a second key provided by the encryption chip to obtain a second encrypted data; a data segment corresponding to the second encrypted data is generated according to the second encrypted data, and the data segment corresponding to the second encrypted data is transmitted to the public cloud for storage.

The embodiments of the present application also provide a hybrid-cloud data reading method, which is executed by a gateway in a private cloud, wherein the method comprises:
stored data in a public cloud is acquired, wherein the stored data including at least one data segment, the at least one data segment including a data block required to be read and metadata corresponding to the data block;
each data segment in the stored data is decompressed one by one, and if it is determined that an encrypted data block exists in the data segment during a decompression process, a decryption algorithm is selected according to metadata of the data block and a key provided by an encryption chip connected with the gateway is determined;
the encrypted data block in the data segment is decrypted according to the decryption algorithm and the key;
an unencrypted data block in the decompressed data segment is combined with the decrypted data block in the decompressed data segment to obtain read data; and
the read data is returned to a terminal device.

The embodiments of the present application also provide a hybrid-cloud data storage apparatus, which includes a memory and a processor, wherein computer-readable instructions is stored in the memory, and the processor executes the computer-readable instructions in the memory to:
receive a data storage instruction from a terminal device in the private cloud, wherein the data storage instruction includes data to be stored in a public cloud; acquire the data to be stored;
determine whether an encryption chip connected with the gateway or the gateway implements encryption; if the encryption is implemented by the encryption chip, determine data required to be encrypted in the data to be stored to obtain first target data;
acquire first encrypted data after the first target data is encrypted, wherein the first target data is encrypted according to a first key provided by an encryption chip connected with a gateway;
generate second target data including the first encrypted data according to the first encrypted data
generate a data segment corresponding to the second target data according to the second target data; and transmit the data segment corresponding to the second target data to a public cloud for storage;
if the encryption is implemented by the gateway, encrypt the data to be stored according to a second key provided by the encryption chip to obtain a second encrypted data; generate a data segment corresponding to the second encrypted data according to the second encrypted data, and transmit the data segment corresponding to the second encrypted data to the public cloud for storage.

The embodiments of the present application also provide a gateway, which includes a memory and a processor, wherein a program is stored in the memory, the processor executes the program to:
receive a data storage instruction from a terminal device in the private cloud, wherein the data storage instruction includes data to be stored in a public cloud; acquire data to be stored;
determine whether an encryption chip connected with the gateway or the gateway implements encryption; if the encryption is implemented by the encryption chip, determine data required to be encrypted in the data to be stored to obtain first target data;
acquire first encrypted data after the first target data is encrypted, wherein the first target data is encrypted according to a first key provided by an encryption chip connected with the gateway;
generate second target data including the first encrypted data according to the first encrypted data;
generate a data segment corresponding to the second target data according to the second target data; and transmit the data segment corresponding to the second target data to a public cloud for storage;
if the encryption is implemented by the gateway, encrypt the data to be stored according to a second key provided by the encryption chip to obtain a second encrypted data; generate a data segment corresponding to the second encrypted data according to the second encrypted data, and transmit the data segment corresponding to the second encrypted data to the public cloud for storage.

The embodiments of the present application also provide a storage medium, which comprises a program, the program being configured to:
receive a data storage instruction from a terminal device in the private cloud, wherein the data storage instruction includes data to be stored in a public cloud; acquire data to be stored;
determine whether an encryption chip connected with the gateway or the gateway implements encryption; if the encryption is implemented by the encryption chip, determine data required to be encrypted in the data to be stored to obtain first target data;
acquire first encrypted data after the first target data is encrypted, wherein the first target data is encrypted according to a first key provided by an encryption chip connected with a gateway;
generate second target data including the first encrypted data according to the first encrypted data;
generate a data segment corresponding to the second target data according to the second target data; and
transmit the data segment corresponding to the second target data to a public cloud for storage;
if the encryption is implemented by the gateway, encrypt the data to be stored according to a second key provided by the encryption chip to obtain a second encrypted data; generate a data segment corresponding to the second encrypted data according to the second encrypted data, and transmit the data segment corresponding to the second encrypted data to the public cloud for storage.

The embodiments of the present application also provide a hybrid-cloud data reading apparatus, which includes a memory and a processor, wherein computer-readable instructions is stored in the memory, and the processor executes the computer-readable instructions in the memory to:
acquire stored data in a public cloud, the stored data including at least one data segment, the at least one data segment including a data block required to be read and metadata corresponding to the data block;
decompress each data segment in the stored data one by one, and if it is determined that an encrypted data block exists in the data segment during a decompression process, select a decryption algorithm according to metadata of the data block and determine a key provided by an encryption chip connected with a gateway;
decrypt the encrypted data block in the data segment according to the decryption algorithm and the key;
combine an unencrypted data block in the decompressed data segment and the decrypted data block in the decompressed data segment to obtain read data; and
return the read data to a terminal device.

The embodiments of the present application also provide a gateway, which includes a memory and a processor, wherein a program is stored in the memory, the processor executes the program, and the program is configured to:
acquire stored data in a public cloud, the stored data including at least one data segment, the at least one data segment including a data block required to be read and metadata corresponding to the data block;
decompress each data segment in the stored data one by one, and if it is determined that an encrypted data block exists in the data segment during a decompression process, select a decryption algorithm according to metadata of the data block and determine a key provided by an encryption chip connected with the gateway;
decrypt the encrypted data block in the data segment according to the decryption algorithm and the key;
combine an unencrypted data block in the decompressed data segment and the decrypted data block in the decompressed data segment to obtain read data; and
return the read data to a terminal device.

The embodiments of the present application also provide a cloud system, which includes at least one terminal device, gateway and encryption chip connected with the gateway in a private cloud, as well as a storage conversion server and storage device in a public cloud,
wherein the gateway is configured to receive a data storage instruction from a terminal device in the private cloud, wherein the data storage instruction includes data to be stored in the public cloud, acquire the data to be stored, determine whether the encryption chip connected with the gateway or the gateway implements encryption; if the encryption is implemented by the encryption chip, determine data required to be encrypted in the data to be stored to obtain first target data, transmit the first target data to the encryption chip to acquire a first encrypted data obtained after the encryption chip encrypts the first target data according to a first key, generate second target data including the first encrypted data according to the first encrypted data, generate a data segment corresponding to the second target data according to the second target data and transmit the data segment corresponding to the second target data to the public cloud for storage; if the encryption is implemented by the gateway, encrypt the data to be stored according to a second key provided by the encryption chip to obtain a second encrypted data; generate a data segment corresponding to the second encrypted data according to the second encrypted data, and transmit the data segment corresponding to the second encrypted data to the public cloud for storage; and
the storage conversion server is configured to generate stored data according to the data segment and update the stored data to the storage device.

The embodiments of the present application also provide a hybrid-cloud data storage method, which is executed by an encryption chip, wherein the method comprises:
first target data required to be encrypted in data to be stored transmitted by a gateway in a private cloud is acquired; wherein the gateway receives a data storage instruction from a terminal device in the private cloud, the data storage instruction includes data to be stored in a public cloud; acquires the data to be stored; determines whether the encryption chip connected with the gateway or the gateway implements encryption; if the encryption is implemented by the encryption chip, the gateway determines data required to be encrypted in the data to be stored to obtain the first target data, and transmits the first target data to the encryption chip;
the first target data is encrypted according to a first key to obtain a first encrypted data; and
the first encrypted data is output to the gateway, so that the gateway determines data in a public cloud according to the first encrypted data; generates second target data including the first encrypted data according to the first encrypted data; generates a data segment corresponding to the second target data according to the second target data; and transmits the data segment corresponding to the second target data to the public cloud for storage, wherein the if the encryption is implemented by the gateway, the gateway encrypts the data to be stored according to a second key provided by the encryption chip to obtain a second encrypted data; generates a data segment corresponding to the second encrypted data according to the second encrypted data, and transmits the data segment corresponding to the second encrypted data to the public cloud for storage.

The embodiments of the present application also provide an encryption chip, which includes at least one memory and at least one processor, wherein a program is stored in the memory, the processor executes the program to:
acquire first target data required to be encrypted in data to be stored transmitted by a gateway in a private cloud; wherein the gateway receives a data storage instruction from a terminal device in the private cloud, the data storage instruction includes data to be stored in a public cloud; acquires the data to be stored; determines whether the encryption chip connected with the gateway or the gateway implements encryption; if the encryption is implemented by the encryption chip, determines data required to be encrypted in the data to be stored to obtain the first target data, and transmits the first target data to the encryption chip;
encrypt the first target data according to a first key to obtain a first encrypted data; and
output the first encrypted data to the gateway to enable the gateway to determine data in a public cloud according to the first encrypted data, generate second target data including the first encrypted data according to the first encrypted data; generate a data segment corresponding to the second target data according to the second target data; and transmit the data segment corresponding to the second target data to the public cloud for storage, wherein the if the encryption is implemented by the gateway, the gateway encrypts the data to be stored according to a second key provided by the encryption chip to obtain a second encrypted data; generates a data segment corresponding to the second encrypted data according to the second encrypted data, and transmits the data segment corresponding to the second encrypted data to the public cloud for storage.

### Brief Description of the Drawings

In order to describe the technical solutions in the embodiments of the present application or the prior art more clearly, the following briefly introduces the accompanying drawings required for describing the embodiments or the related technology. Apparently, the accompanying drawings in the following description merely show some embodiments of the present disclosure, and a person of ordinary skill in the art may still derive other drawings from these accompanying drawings without creative efforts.
Figure 1 is an architecture block diagram of a cloud system of a hybrid cloud according to some embodiments of the present application;
Figure 2A is a flowchart of a data storage method for a hybrid cloud according to some embodiments of the present application;
Figure 2B is a signaling flowchart of a hybrid-cloud data storage method according to some embodiments of the present application;
Figure 3 is another signaling flowchart of the hybrid-cloud data storage method;
Figure 4 is a flowchart of a method for generating and updating stored data to a storage object;
Figure 5 is a schematic diagram of interaction between a gateway and an encryption chip for encryption of data;
Figure 6 is another signaling flowchart of the hybrid-cloud data storage method;
Figure 7 is a flowchart of a hybrid-cloud data storage method according to some embodiments of the present application;
Figure 8 is a signaling flowchart of a hybrid-cloud data reading method according to some embodiments of the present application;
Figure 9 is a structure block diagram of a hybrid-cloud data storage apparatus according to some embodiments of the present application;
Figure 10 is another structure block diagram of the hybrid-cloud data storage apparatus;
Figure 11 is another structure block diagram of the hybrid-cloud data storage apparatus;
Figure 12 is a hardware structure block diagram of a gateway; and
Figure 13 is a structure block diagram of a hybrid-cloud data reading apparatus according to some embodiments of the present application.

### Description of Embodiments

The technical solutions in the embodiments of the present application will be clearly and completely described below with reference to the accompanying drawings in the embodiments of the present application. Apparently, the embodiments described are merely a part rather than all of the embodiments of this application. All other embodiments obtained by persons skilled in the art based on the embodiments of this application without creative efforts shall fall within the protection scope of this application.

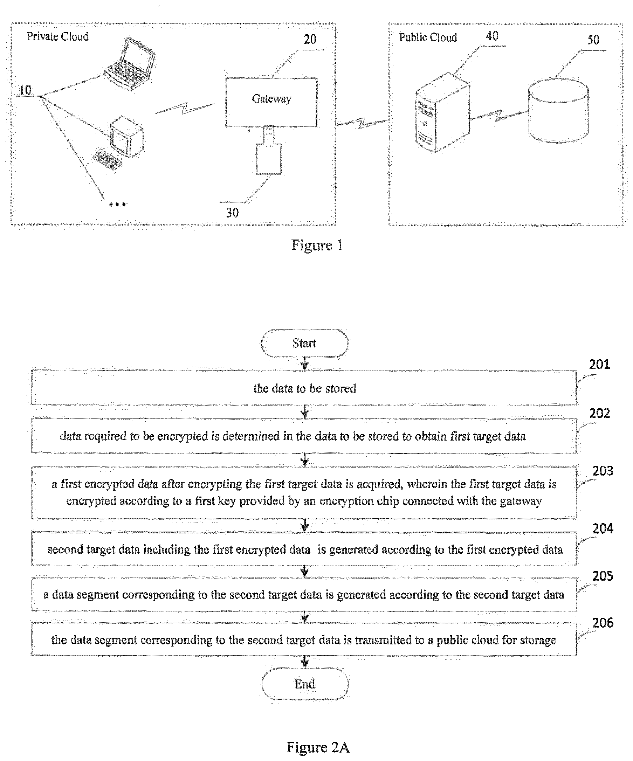

Figure 1 is an architecture block diagram of a cloud system of a hybrid cloud according to some embodiments of the present application. Through the cloud system shown in Figure 1, a data storage method for a hybrid cloud in the embodiments of the present application may be implemented to achieve the purpose of improving the security of data, stored in a public cloud, of a private cloud.

Referring to Figure 1, the cloud system includes at least one terminal device 10, a gateway 20, an encryption chip 30, a storage conversion server 40 and a storage device 50. The at least one terminal device 10, the gateway 20 and the encryption chip 30 are in the private cloud, and the storage conversion server 40 and the storage device 50 are in the public cloud. The private cloud and the public cloud may communicate through a specific security protocol. For example, the private cloud and the public cloud may communicate through a Secure Sockets Layer (SSL) protocol.

As shown in Figure 1, the at least one terminal device 10 in the private cloud may be considered as a terminal device with a data storage and read-write requirement in the private cloud, and a form of the terminal device 10 may be, not limited to, at least one user-side electronic device such as a smart phone, a tablet computer and a Personal Computer (PC). In various embodiments of the present application, the at least one terminal device 10 in the private cloud may establish a communication connection with the gateway 20 in the private cloud, and when the terminal device 10 is required to store data in the public cloud, the terminal device 10 may transmit the data to the gateway 20 in the private cloud, which is processed and sent to the public cloud by the gateway 20.

The gateway 20 in the private cloud may be considered as a storage gateway and serves as a bridge between the private cloud and the public cloud. The encryption chip 30 is connected to the gateway 20. The encryption chip 30 stores a key for data encryption. In some embodiments, the encryption chip 30 may adopt a Universal Serial Bus (USB) key, and the USB key may include a built-in single-chip microcomputer or smart card chip with a certain storage space where the key may be stored.

The gateway 20, when acquiring data to be stored, may encrypt all or part of the data to be stored by using the key provided by the encryption chip 30 according to the data storage method for the hybrid cloud in the embodiments of the present application (an encryption operation may be implemented by the encryption chip 30 or the gateway 20), so that the gateway 20 acquires an encrypted ciphertext and may generate a data segment according to target data to be stored including the ciphertext and transmit it to the public cloud for storage.

The storage conversion server 40 in the public cloud may acquire the data segment transmitted by the gateway in the private cloud and perform storage conversion processing such as protocol conversion on the data segment to ensure that the data is consistent with a protocol of the storage device, thereby storing the processed data in the storage device 50.

The storage device 50 may be considered as a data storage system structure and in some embodiments adopts an object storage.

It can be seen that, according to various embodiments of the present application, the encryption chip may be connected to the gateway in the private key, the encryption chip stores the encryption key and part or all of the data to be stored may be encrypted by using the key provided by the encryption chip in various embodiments of the present application to ensure that the data stored in the public cloud includes the ciphertext obtained by encryption with the key provided by the encryption chip, so that the security of the data stored in the public cloud is improved; and moreover, the key for encryption is stored by the encryption chip connected to the gateway in the private cloud, so that the hidden hazard of data decryption and leakage due to the key being acquired by a manager is reduced, the hidden hazard of data decryption and leakage is reduced because of lacking of the key even if the public cloud is attacked by a hacker and the data in the public cloud is leaked, and the security of the data, stored in the public cloud, of the private cloud is further improved.

Based on the cloud system shown in Figure 1, various embodiments of the present application provide a data storage method for a hybrid cloud, which is applied to a gateway in a private cloud. Figure 2A is a flowchart of a data storage method for a hybrid cloud according to some embodiments of the present application. As shown in Figure 2A, the data storage method for the hybrid cloud includes the following.

In block 201, data to be stored is acquired.

In block 202, data required to be encrypted is determined in the data to be stored to obtain first target data.

In some embodiments, ze of the data required to be encrypted in the data to be stored is determined, and a corresponding position of the data required to be encrypted in the data to be stored is determined; and the data required to be encrypted in the data to be stored is determined according to the size and the position, and the data required to be encrypted is determined as the first target data.

In some embodiments, when the corresponding position of the data required to be encrypted in the data to be stored is determined, a corresponding block address offset of the data to be encrypted in the data to be stored is determined.

In block 203, a first encrypted data after encrypting the first target data is acquired, wherein the first target data is encrypted according to a first key provided by an encryption chip connected with the gateway.

In some embodiments, the first target data is transmitted to the connected encryption chip; and the first encrypted data is acquired from the encryption chip. The encryption chip encrypts the first target data according to the stored first key to generate the first encrypted data.

In block 204, second target data including the first encrypted data is generated according to the first encrypted data.

In some embodiments, an original position of the first target data in the data to be stored is overwritten with the first encrypted data according to the block address offset to obtain the second target data.

In block 205, a data segment corresponding to the second target data is generated according to the second target data.

In block 206, the data segment corresponding to the second target data is transmitted to a public cloud for storage.

In some embodiments, a configuration table may further be obtained; and when the configuration table indicates that encryption is implemented by the encryption chip, a process that the first target data is transmitted to the connected encryption chip is triggered to be executed.

In some embodiments, the operation that the size of the part of data required to be encrypted in the data to be stored is determined includes that: size recorded in the configuration table is determined as the size of the data required to be encrypted in the data to be stored; and the operation that the corresponding position of the data required to be encrypted in the data to be stored is determined includes that: a corresponding position recorded in the configuration table is determined as the position of the data required to be encrypted in the data to be stored.

In some embodiments, if the configuration table indicates that part of the data to be stored is to be encrypted, the process that the data required to be encrypted in the data to be stored is determined is performed.

In some embodiments, when the configuration table indicates that all the data to be stored is to be encrypted, a second encrypted data after encrypting the data to be stored is acquired, wherein the data to be stored is encrypted according to a second key provided by the encryption chip connected with the gateway; and a data segment corresponding to the second encrypted data is generated according to the second encrypted data, and is transmitted to the public cloud for storage.

In some embodiments, the second encrypted data after encrypting the data to be stored is acquired includes that: whether the second key requested form the encryption chip last time is within a set life
cycle or not is determined; when the second key is within the set life cycle, the second key is acquired, and the data to be stored is encrypted according to the second key to obtain the second encrypted data; and if the second key is not within the set life cycle, a third key is requested from the encryption chip, and the data to be stored is encrypted according to the obtained third key to obtain the second encrypted data.

In some embodiments, whether an address space of the acquired data to be stored corresponds to an address space recorded in the configuration table for data required to be encrypted before storage or not is determined; whether the acquired data to be stored is required to be encrypted or not is judged according to a storage frequency recorded in the configuration table for the data required to be encrypted before storage; and if both judgment results are YES, the process that the data required to be encrypted in the data to be stored is determined is performed.

In some examples, the first key, the second key and the third key may be the same key and may also be different keys with different key Identifiers (IDs).

According to various embodiments of the present application, the encryption chip may be connected to the gateway in the private key, the encryption chip stores the encryption key and part or all of the data to be stored may be encrypted by using the key provided by the encryption chip in various embodiments of the present application to ensure that the data stored in the public cloud includes the ciphertext obtained by encryption with the key provided by the encryption chip, so that the security of the data stored in the public cloud is improved; and moreover, the key for encryption is stored by the encryption chip connected to the gateway in the private cloud, so that the hidden hazard of data decryption and leakage due to the key being acquired by a manager is reduced, the hidden hazard of data decryption and leakage is reduced because of lacking of the key even if the public cloud is attacked by a hacker and the data in the public cloud is leaked, and the security of the data, stored in the public cloud, of the private cloud is further improved.

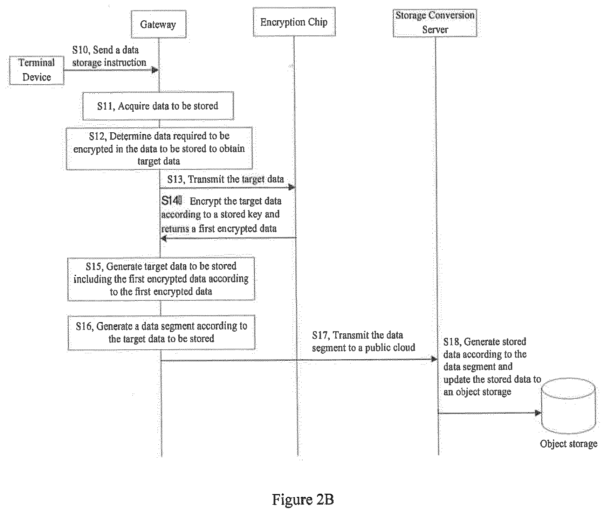

According to various embodiments of the present application, the data to be stored may be partially encrypted through the encryption chip connected with the gateway in the private cloud. Based on the cloud system shown in Figure 1, Fig. 2B is an signaling flowchart of a data storage method for a hybrid cloud according to some embodiments of the present application. As shown in Figure 1 and Figure 2B, the signaling flow may include the following.

In S 10, a terminal device in a private cloud sends a data storage instruction to a gateway in the private cloud, the data storage instruction including data required to be stored.

In some embodiments, a user of the private cloud may operate the terminal device to trigger S10. The user of the private cloud may specify the data to be stored in a public cloud and operate the terminal device to send the data storage instruction to the gateway in the private cloud to instruct the gateway in the private cloud to store the data in the public cloud. The data storage instruction may include the data required to be stored.

In S11, the gateway in the private cloud acquires data to be stored.

In some embodiments, the data may be stored in form of a data block. If a size of the data required to be stored received by the gateway in the private cloud is relatively large, processing of data block partitioning may be performed on the data required to be stored to obtain multiple data blocks, and thus each data block is determined as data to be stored. According to some embodiments of the present application, a size of the data block obtained by partitioning may be 1 Mbytes. It is apparent that the size of the data block may specifically be regulated and set according to a practical condition.

If the size of the data required to be stored received by the gateway in the private cloud is too small to partition, for example, the size of the data required to be stored is only 5 Kbytes, the data required to be stored may be directly determined as the data to be stored in various embodiments of the present application.

In some embodiments, the gateway may externally provide a virtual Internet Small Computer Interface (ISCSI) block storage device, namely a block storage volume is provided through an ISCSI, the storage volume being a linear address space. That is, for the terminal device in the private cloud, the gateway in the private cloud may implement an ISCSI target (ISCSI storage device), and for the terminal device in the private cloud, the gateway may be an interface of a block storage device and may virtualize multiple storage volumes for multiple terminal devices to use.

In some embodiments, the gateway may perform the processing of data block partitioning on the data required to be stored by use of the block storage volume provided through the ISCSI, thereby acquiring the data to be stored.

It is to be noted that the ISCSI provided by the gateway may be similar to a block storage interface of a hard disk. Data is accessed through the block storage interface of the hard disk according to sector number marks. For example, a 100 Mbytes file is managed through a file system at first and finally stored in a group of sectors in the hard disk, the group of sectors may be continuous and may also be discontinuous, and the specific sectors for storage are determined by the file system. In various embodiments of the present application, the virtual ISCSI block storage device externally provided by the gateway in the private cloud is a storage device of the same layer as the hard disk and manages data blocks similar to the sectors. A data block of a normal hard disk is a sector and is usually 512 Kbytes. In various embodiments of the present application, the gateway may partition the data to be stored into larger data blocks, for example, 1M, for management according to a setting, and the size of the data block may specifically be set according to the practical condition.

In S12, the gateway determines data required to be encrypted in the data to be stored to obtain target data.

If the data required to be stored is partitioned into multiple data blocks, in various embodiments of the present application, each data block may be determined as data to be stored, and data required to be encrypted in each data block is determined to obtain the target data. If the size of the data to be stored is relatively small, the data required to be stored sent by the terminal device may be directly determined as the data to be stored, and in various embodiments of the present application, the data required to be encrypted in the data to be stored may be determined to obtain the target data.

In some embodiments, an encryption operation may be executed by an encryption chip connected with the gateway in the private cloud, and the encryption chip may encrypt data required to be encrypted in the data to be stored.

It is apparent that all the data to be stored may be encrypted in various embodiments of the present application. In some embodiments, whether the encryption chip specifically encrypts all or part of the data to be stored may be recorded in a configuration table of the gateway, and content recorded in the configuration table may be modified and regulated by the user. If it is recorded in the configuration table that the encryption chip encrypts all the data to be stored, all the data to be stored may be encrypted in various embodiments of the present application. If it is recorded in the configuration table that the encryption chip encrypts part of the data to be stored, the data required to be encrypted in the data to be stored may be determined to obtain the target data in various embodiments of the present application.

In S13, the gateway transmits the target data to a connected encryption chip.

In some embodiments, the gateway may be connected with the encryption chip through a USB, and the gateway may transmit the target data to the encryption chip through a USB communication protocol.

In S14, the encryption chip encrypts the target data according to a stored key and returns a first encrypted data to the gateway.

The encryption chip, after acquiring the target data transmitted by the gateway, may encrypt the target data, according to the key stored in the encryption chip to obtain the first encrypted data. The encryption chip may return the first encrypted data to the gateway. The first encrypted data may be considered as a ciphertext obtained by encrypting data required to be encrypted in the data to be stored.

The key may be considered as a group of specific secret data. During encryption, the key controls an encryption algorithm to convert a plaintext into a corresponding ciphertext according to a specified manner and convert a group of information source identification information into an unforgeable signature information. During decryption, the key controls a decryption algorithm to convert the ciphertext into a corresponding plaintext according to a specified manner and convert the signature information into an undeniable information source evidence.

In some embodiments, the encryption algorithm used may be set according to the practical condition.

In S15, the gateway generates target data to be stored including the first encrypted data according to the first encrypted data.

In some embodiments, if the encryption chip encrypts data required to be encrypted in the data to be stored, the first encrypted data encrypted is a result obtained by encrypting data required to be encrypted in the data to be stored. In various embodiments of the present application, an original position of the target data in the data to be stored may be overwritten with the first encrypted data, thereby generating the target data to be stored including the first encrypted data.

In S 16, the gateway generates a data segment according to the target data to be stored.

In some embodiments, metadata of the target data to be stored may be determined and the metadata is merged with the target data to be stored to generate the data segment. In some embodiments, the target data to be stored may be compressed and merged with the metadata to generate the data segment.

In some embodiments, content of the metadata may include at least one of: indication information about whether the data to be stored is a complete data block or not, a block address offset, a data length of the data to be stored, indication information about whether the data to be stored is partially encrypted or completely encrypted, an internal offset of the ciphertext, a data length of the ciphertext, encryption manner indication information about whether the encryption chip or the gateway implements encryption, a key ID of the presently used key or a seed ID, indication information about the encryption algorithm, indication information about a compression algorithm and the like.

The key ID corresponds to the key presently used by the encryption chip, and one key stored by the encryption chip corresponds to one key ID. The seed ID corresponds to a seed for generation of the key, and one seed corresponds to one seed ID.

In S17, the gateway transmits the data segment to a public cloud.

In some embodiments, the gateway transmits the data segment to the public cloud for storage, and a storage conversion server in the public cloud may receive the data segment.

In S18, the storage conversion server in the public cloud generates stored data according to the data segment and updates the stored data to an object storage.

In some embodiments, the storage conversion server may generate the stored data according to the data segment through different processing processes according to whether the data to be stored is a complete data block or not. Whether the data to be stored is a complete data block or not may be determined by the indication information, recorded in the metadata in the data segment, about whether the data to be stored is a complete data block or not.

If the data to be stored is a complete data block, the storage conversion server may directly merge the data segment and a specified stored data content to generate the stored data, so that corresponding data stored in the object storage previously may be overwritten with the target data to be stored of the data segment in the stored data. Meanwhile, the corresponding metadata and the specific stored data content are recorded in the object storage.

In some embodiments, if the data to be stored is not a complete data block, for example, the data to be stored is only 5k data and does not meet a 1M size requirement on a complete data block, the storage conversion server may retrieve at least one original data segment corresponding to the data to be stored from the storage device, decompress each original data segment retrieved one by one to obtain at least one original data block, merge the target data to be stored and the at least one original data block to obtain at least one data block required to be stored, compress the at least one data block required to be stored, merge compressed data and the metadata to form the data segment and merge the formed data segment and the specific stored data content to generate the stored data, thereby updating the stored data in the object storage.

In some embodiments, the storage conversion server, when a protocol of the data segment is inconsistent with a protocol of the storage device, may further convert the protocol of the data segment to be consistent with the protocol of the storage device.

The storage device, when recording the stored data, may allocate different blocks according to address spaces of data blocks. One data block of the stored data corresponds to one file. A block number of the data block is identified with an identification value (bno). The bno is calculated through an address and a block size. For example, 1 Mbytes is a block, the bno corresponding to 0-1 Mbytes is 0, the bno corresponding to 1-2 Mbytes is 1, and so on. Address mod block size may be considered as the bno.

In some embodiments, the specific stored data content may include at least one of: a data attribute (a data block version and a data header-fixed length (a protocol version, the data block version and the number of fragments).

Correspondingly, a structure of the stored data may be as follows:
the data attribute, including the data block version;
the data header-fixed length, including the protocol version, the data block version number and the number of the fragments;
the data segment-fixed length (i.e., the metadata), including: the indication information about whether the data to be stored is a complete data block or not, the block address offset, the data length of the data to be stored, the indication information about partial encryption or complete encryption, the internal offset of the ciphertext, the data length of the ciphertext, the encryption manner indication information about whether the encryption chip or the gateway implements encryption, the key ID of the presently used key or the seed ID, the encryption algorithm, the compression algorithm and the like; and
the data segment-variable length, including the specific data block.

It can be seen that, when the data in the private cloud is stored in the public cloud based on the signaling flow shown in Figure 2, according to various embodiments of the present application, part of the data to be stored may be encrypted by using the key provided by the encryption chip connected with the gateway in the private cloud to store the target data to be stored including the first encrypted data in the public cloud. Since the target data to be stored includes the first encrypted data with the key provided by the encryption chip, the security of the data stored in the public cloud is improved. Moreover, the key for encryption is stored by the encryption chip, so that leakage risk of the key is extremely low, leakage risk of the data under the conditions that a cloud manager leaks the data and the public cloud is attacked by a hacker and the like may be reduced, and the security of the data, stored in the public cloud, of the private cloud is improved.

In some embodiments, in the signaling flow shown in Figure 2, the encryption chip may encrypt part of the data to be stored, but the condition that encryption chip encrypts all the data to be stored is not excluded. Since the encryption chip may be poor in encryption performance and may not encrypt all the data to be stored, the encryption chip encrypts part of the data to be stored in various embodiments of the present application. It is apparent that this is only a solution when the encryption chip executes the encryption operation and the condition that the encryption chip encrypts all the data to be stored when the encryption performance of the encryption chip is high enough is not excluded in the embodiments of the present application.

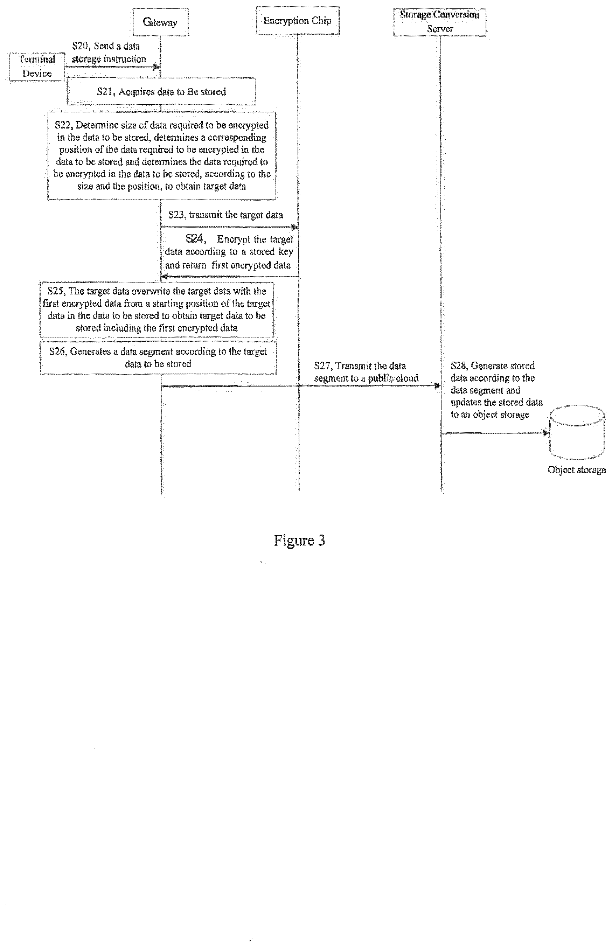

In some embodiments, Figure 3 illustrates another signaling flow of a data storage method for a hybrid cloud according to various embodiments of the present application. As shown in Figure 1 and Figure 3, the signaling flow may include the following.

In S20, a terminal device in a private cloud sends a data storage instruction to a gateway in the private cloud.

In S21, the gateway in the private cloud acquires data to be stored.

In S22, the gateway determines size of data required to be encrypted in the data to be stored, determines a corresponding position of the data required to be encrypted in the data to be stored and determines the data required to be encrypted in the data to be stored, according to the size and the position, to obtain target data.

In some embodiments, the size of the data required to be encrypted in the data to be stored and the corresponding position (a corresponding block address offset of the data required to be encrypted in the data to be stored if the data to be stored is a data block) of the data required to be encrypted in the data to be stored may be determined, thereby determining the data required to be encrypted in the data to be stored according to the set size of the data required to be encrypted and the corresponding position the data required to be encrypted in the data to be stored to obtain the target data.

In some embodiments, the size of the data required to be encrypted and the corresponding position of the data required to be encrypted in the data to be stored may be recorded in a configuration table, and modified and regulated by the user. For example, the configuration table may record the size of the data required to be encrypted and the corresponding block address offset of the data required to be encrypted in the data to be stored. Correspondingly, according to various embodiments of the present application, the size recorded in the configuration table is determined as the size of the data required to be encrypted in the data to be stored and the corresponding position recorded in the configuration table is determined as the data required to be encrypted in the data to be stored.

In some embodiments, the corresponding block address offset of the target data required to be encrypted may be considered as a starting address of the to-be-encrypted target data (the data required to be encrypted) in the data to be stored. For example, if a size of a piece of the data to be stored is 1 Mbytes, and 2 Kbytes target data in the data to be stored of 1 Mbytes is encrypted, a starting address of the 2K target data in the data to be stored of 1M may be considered as a corresponding block address offset of a first encrypted data after the 2 Kbytes target data is encrypted.

For example, when the data to be stored is a data block obtained by data block partitioning processing, and after the size (the numerical value is only an example) of the data required to be encrypted is 2 Kbytes and the corresponding block address offset of the data required to be encrypted are set, the gateway may select 2 Kbytes data in the data to be stored, starting from the block address offset, as the data required to be encrypted to obtain the target data.

In some embodiments, the size of the data required to be encrypted in the data to be stored and the corresponding position of the data required to be encrypted in the data to be stored may also be determined randomly.

In S23, the gateway transmits the target data to a connected encryption chip.

In S24, the encryption chip encrypts the target data according to a stored key and returns a first encrypted data to the gateway.

In S25, the gateway overwrites the target data with the first encrypted data from a starting position of the target data in the data to be stored to obtain target data to be stored including the first encrypted data.

In some embodiments, the gateway, after acquiring the first encrypted data, may determine the corresponding block address offset of the data required to be encrypted corresponding to the first encrypted data in the data to be stored, thereby overwriting an original position of the target data in the data to be stored with the first encrypted data to obtain the target data to be stored including the first encrypted data, namely overwriting the target data with the first encrypted data from the starting position of the target data in the data to be stored according to the block address offset to obtain the target data to be stored including the first encrypted data.

In S26, the gateway generates a data segment according to the target data to be stored.

In some embodiments, metadata of the target data to be stored may be merged with the target data to be stored to generate the data segment. Content of the metadata may refer to the above description.

In S27, the gateway transmits the data segment to a public cloud.

In S28, a storage conversion server in the public cloud generates stored data according to the data segment and updates the stored data to an object storage.

In some embodiments, descriptions about S28 may be similar to S18 in Figure 2. It is further to be noted that, if the data to be stored is not a complete data block, at least one original data block obtained by decompressing an original data segment may be merged with the target data to be stored to obtain at least one data block required to be stored through the following process.

If an encrypted data intersection condition does not exist between the original data block obtained by decompressing each retrieved original data segment one by one and the target data to be stored, the original data block may be merged with the target data to be stored to obtain a complete data block. If the encrypted data intersection condition exists between the original data block and the target data to be stored, the original data block with encrypted data intersection with the target data to be stored is kept independent, the original data block without encrypted data intersection with the target data to be stored is merged with the target data to be stored, and the independent original data block and the merged data block are integrated to obtain the at least one data block required to be stored.

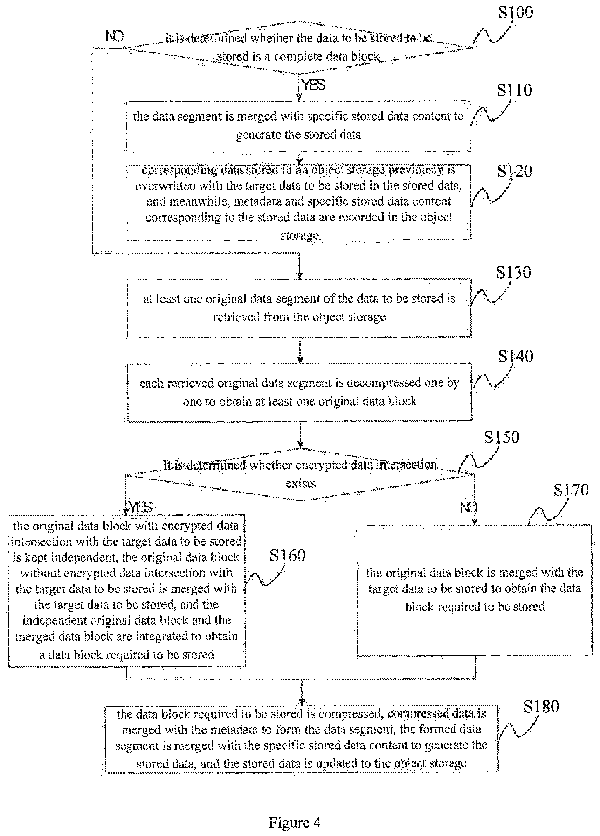

In some embodiments, an execution flow of S28, as shown in Figure 4, may include the following.

In block S100, it is determined whether the data to be stored to be stored is a complete data block, if the data to be stored is a complete data block, block S110 is executed, otherwise, block S130 is executed.

In some embodiments, whether the data to be stored is a complete data block may be determined through indication information, recorded in the metadata in the data segment, about whether the data to be stored is a complete data block or not.

In S110, the data segment is merged with specific stored data content to generate the stored data.

In some embodiments, the data segment may include the target data to be stored and the corresponding metadata.

In S120, corresponding data stored in an object storage previously is overwritten with the target data to be stored in the stored data, and meanwhile, metadata and specific stored data content corresponding to the stored data are recorded in the object storage.

In S130, at least one original data segment of the data to be stored is retrieved from the object storage.

For example, if the data to be stored is 5 Kbytes and the object storage stores the data by a 1 Mbytes data block, the original data segment corresponding to the 5 Kbytes data to be stored and stored by the 1 Mbytes data block in the object storage may be retrieved from the object storage.

In S140, each retrieved original data segment is decompressed one by one to obtain at least one original data block.

In S150, it is determined whether an encrypted data intersection exists between the encrypted data of the original data block and the encrypted data of the target data to be stored, if the encrypted data intersection exists, block 5160 is executed, otherwise, block S170 is executed.

In some embodiments, according to various embodiments of the present application, whether the encrypted data intersection exists between the encrypted data of the original data block and the encrypted data of the target data to be stored or not may be determined through address spaces of encrypted data in the target data to be stored and the original data block and lengths of the encrypted data. For example, if the address space of the encrypted data in the target data to be stored is 4-7 and the address space of the encrypted data in the original data block is 16-19, the encrypted data intersection does not exist; and if the address space of the encrypted data in the target data to be stored is 4-7 and the address space of the encrypted data in the original data block is 6-9, the encrypted data intersection exists.

In S160, the original data block with encrypted data intersection with the target data to be stored is kept independent, the original data block without encrypted data intersection with the target data to be stored is merged with the target data to be stored, and the independent original data block and the merged data block are integrated to obtain a data block required to be stored.

For example, if the target data to be stored is 5K data including a 2K ciphertext, after original data blocks are determined, the original data block in which encrypted data exists and of which an address of the encrypted data is intersected with an address of the 2K ciphertext is kept independent and not merged with the target data to be stored; and the original data block including encrypted data of which an address is not intersected with the address of the 2K ciphertext or the original data block including no encrypted data may be merged with the target data to be stored to obtain a merged data block; and then the independent original data block with encrypted data intersection may be integrated with the merged data block.

In S170, the original data block is merged with the target data to be stored to obtain the data block required to be stored.

In S180, the data block required to be stored is compressed, compressed data is merged with the metadata to form the data segment, the formed data segment is merged with the specific stored data content to generate the stored data, and the stored data is updated to the object storage.

Correspondingly, from the angle of connecting the gateway in the private cloud, the encryption chip may acquire the target data required to be encrypted in the data to be stored transmitted by the gateway, encrypt the target data according to the key to obtain the first encrypted data and output the first encrypted data to the gateway to enable the gateway to determine the data to be stored in the public cloud according to the first encrypted data (which may refer to subsequent processing after the gateway acquires the first encrypted data).

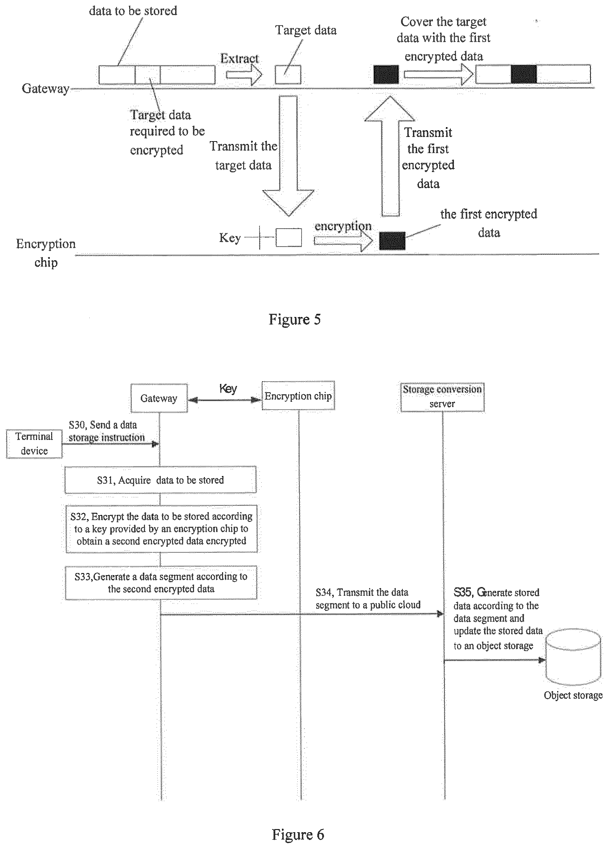

From the prospective of the private cloud, when the encryption chip encrypts the data required to be encrypted, an interaction process of the encryption chip and the gateway is shown in Figure 5. The gateway may determine the data required to be encrypted in the data to be stored according to the size of the data required to be encrypted in the data to be stored and the corresponding position of the data required to be encrypted in the data to be stored to obtain the target data and transmit the target data to the encryption chip; the encryption chip encrypts the target data according to the stored key and returns the first encrypted data to the gateway; and the gateway may overwrite the target data with the first encrypted data from the original position of the target data in the data to be stored according to the block address offset to obtain the target data to be stored including the first encrypted data. Therefore, the effect of encrypting part of the data to be stored is achieved.

In some embodiments, the encryption operation may also be executed in the gateway in the private cloud. After the gateway acquires the key once from the encryption chip, a set life cycle may be kept for the key acquired at one time, and the gateway may execute the encryption operation by using the key presently within the set life cycle. The gateway may also acquire the key once from the encryption chip for the encryption operation every time when storing data, thereby executing the encryption operation on the target data in the data to be stored by using the key provided by the encryption chip.

In some embodiments, Figure 6 illustrates another signaling flow of a data storage method for a hybrid cloud according to some embodiments of the present application. As shown in Figure 1 and Figure 6, the signaling flow may include the following.

In S30, a terminal device in a private cloud sends a data storage instruction to a gateway in the private cloud.

In S31, the gateway in the private cloud acquires data to be stored.

In S32, the gateway encrypts the data to be stored according to a key provided by an encryption chip to obtain a second encrypted data encrypted.

In some embodiments, if a configuration table indicates that the data to be stored is completely encrypted, the data to be stored may be encrypted to obtain the second encrypted data; and if the configuration table indicates that part of the data to be stored is encrypted, the data required to be encrypted may be determined from the data to be stored according to the abovementioned method contents to obtain target data, and the gateway or the encryption chip encrypts the target data to obtain the first encrypted data.

In some embodiments, the gateway may request the connected encryption chip for the key, thereby acquiring the key provided by the encryption chip and further encrypting the target data by use of the key. In this manner, the gateway requests the encryption chip for the key every time when an encryption operation is executed.

In some embodiments, another manner may be that the gateway, after requesting the encryption chip for the key once, a set life cycle may be kept for the obtained key, and if a key requested form the encryption chip last time is still within the set life cycle, the gateway may encrypt the data to be stored according to the key requested form the encryption chip last time. In some embodiments, the key requested form the encryption chip last time may be stored in the gateway and kept valid within the set life cycle, and after the set life cycle is exceeded, the gateway may request the encryption chip for a key again and encrypt the data to be stored according to the obtained key to obtain the second encrypted data.

In some embodiments, the set life cycle kept for the key acquired at one time may refer to: set valid time of the key acquired at one time, or, that the key acquired at one time may support n times data reads-writes of the gateway, n being a set value and set according to a practical condition.

In some embodiments, the key acquired by the gateway from the encryption chip every time may be consistent. It is apparent that the condition that the encryption chip dynamically generates dynamically changing keys is not excluded but the key may correspond to a key ID.

In S33, the gateway generates a data segment according to the second encrypted data.

In S34, the gateway transmits the data segment to a public cloud.

In S35, a storage conversion server in the public cloud generates stored data according to the data segment and updates the stored data to an object storage.

In various embodiments, the gateway may encrypt all the data to be stored. It is apparent that the encryption chip may also encrypt all the data to be stored.

In some embodiments, the solutions that the encryption chip encrypts part or all of the data to be stored and the gateway encrypts part or all of the data to be stored are described above and these solutions may be parallel. One of these solutions may be selected for application under the condition that the data to be stored in the public cloud is encrypted by using the key provided by the encryption chip connected with the gateway.

It is apparent that the solutions that the encryption chip encrypts part of the data to be stored and the gateway encrypts all the data to be stored in these solutions may be adopted.

In some embodiments, whether to select the encryption chip to encrypt part of the data to be stored or select the gateway to encrypt all the data to be stored may be recorded and regulated through the configuration table.

In some embodiments, the configuration table may record at least one of:
indication information about whether the data to be stored is partially encrypted or completely encrypted;
encryption manner indication information about whether the encryption chip or the gateway implements encryption;
a size of data required to be encrypted and corresponding block address offset of the data required to be encrypted in the data to be stored under a partial encryption condition;
a key ID and indication information about an encryption algorithm under the condition that the encryption is implemented by the encryption chip , wherein a manager of the encryption chip may further set the key ID and the corresponding key in the encryption chip; and
a seed ID for generation of the key and indication information about the encryption algorithm under the condition that the encryption is implemented by the gateway , wherein the manager of the encryption chip may further set the seed ID and a corresponding seed in the encryption chip.

In some embodiments, the configuration table may further record indication information about a compression algorithm.

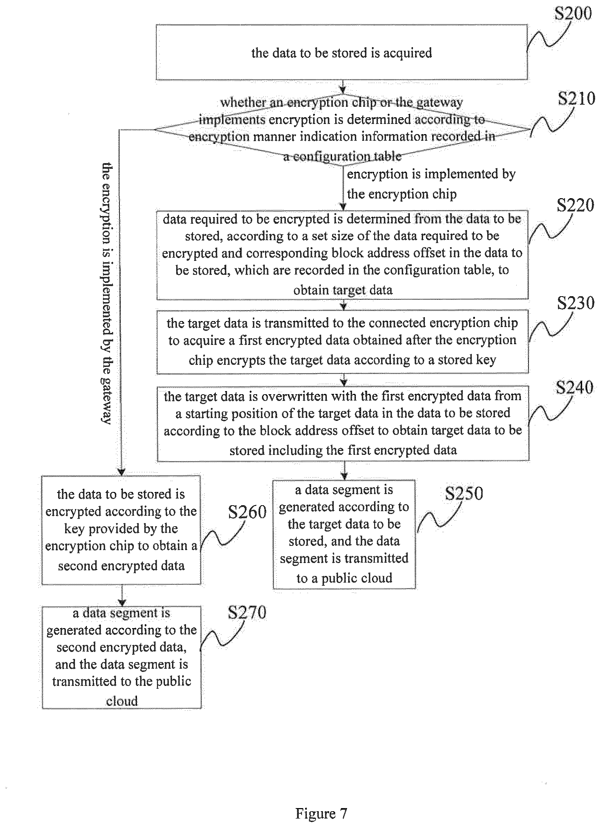

In some embodiments, under the condition of combining encryption of part of the data to be stored by the encryption chip and encryption of all the data to be stored by the gateway, Figure 7 illustrates a flow of a data storage method for a hybrid cloud according to some embodiments of the present application. The method may be applied to a gateway in a private cloud. Referring to Figure 7, the method may include the following.

In block S200, data to be stored is acquired.

In some embodiments, an address space of data required to be encrypted before storage may also be recorded in a configuration table (the address space of the data to be stored may be determined by a block storage volume provided by an ISCSI of the gateway, the storage volume corresponds to a linear address space and each partitioned data block (a form of the data to be stored) may correspond to an address space), if an address space of the acquired data to be stored corresponds to the address space recorded in the configuration table for the data required to be encrypted, a subsequent flow shown in Figure 7 may be executed, otherwise the data to be stored may be stored as a plaintext.

In some embodiments, a storage frequency of data required to be encrypted before storage may also be recorded in the configuration table, for example, one encryption is performed for a set number of times of storage, so that whether the acquired data to be stored is required to be encrypted or not may be determined according to the storage frequency recorded in the configuration table for the data required to be encrypted before storage, if the acquired data to be stored is required to be encrypted, the subsequent flow shown in Figure 7 may be executed, otherwise the data to be stored may be stored as the plaintext.

Furthermore, whether the subsequent flow shown in Figure 7 is required to be executed based on the acquired data to be stored or not may be determined in combination with the address space of the data required to be encrypted before storage and storage frequency of the data required to be encrypted before storage, which are recorded in the configuration table, if the address space of the acquired data to be stored corresponds to the address space recorded in the configuration table for the data required to be encrypted before storage and it is determined, according to the storage frequency recorded in the configuration table for the data required to be encrypted before storage that the acquired data to be stored is required to be encrypted, the subsequent flow shown in Figure 7 may be determined to be executed, otherwise the data to be stored may be stored as the plaintext.

In S210, whether an encryption chip or the gateway implements encryption is determined according to encryption manner indication information recorded in a configuration table, if the encryption is implemented by the encryption chip, S220 is executed, and if the encryption is implemented by the gateway, S260 is executed.

In S220, data required to be encrypted is determined from the data to be stored, according to a set size of the data required to be encrypted and corresponding block address offset in the data to be stored, which are recorded in the configuration table, to obtain target data.

In S230, the target data is transmitted to the connected encryption chip to acquire a first encrypted data obtained after the encryption chip encrypts the target data according to a stored key.

In S240, the target data is overwritten with the first encrypted data from a starting position of the target data in the data to be stored according to the block address offset to obtain target data to be stored including the first encrypted data.

In S250, a data segment is generated according to the target data to be stored, and the data segment is transmitted to a public cloud.

In S260, the data to be stored is encrypted according to the key provided by the encryption chip to obtain a second encrypted data.

In some embodiments, the encryption chip encrypts part of the data to be stored, and the gateway encrypts all the data to be stored.

In S270, a data segment is generated according to the second encrypted data, and the data segment is transmitted to the public cloud.

In some embodiments, the second encrypted data may be merged with metadata to generate the data segment.

In some embodiments, a number of read-write interval that the gateway acquires the key from the encryption chip may further be recorded in the configuration table. For example, the gateway acquires the key once from the encryption chip every n reads-writes. According to various embodiments of the present application, part of the data to be stored may be encrypted by the encryption chip according to the key, and all the data to be stored may be encrypted by the gateway according to the key provided by the encryption chip, so that part or all of the data to be stored is encrypted, and the data including the ciphertext encrypted is stored in the public cloud.

Since the target data to be stored includes the ciphertext obtained by encryption with the key provided by the encryption chip, the security of the data stored in the public cloud is improved. Moreover, the key for encryption is stored by the encryption chip, so that the key leakage risk is extremely low, the key may hardly be acquired in any manner after the encryption chip is disconnected from the gateway, the data leakage risk under the conditions that a cloud manager leaks the data, and the public cloud is attacked by a hacker and the like may be reduced, and the security of the data, stored in the public cloud, of the private cloud is further improved.

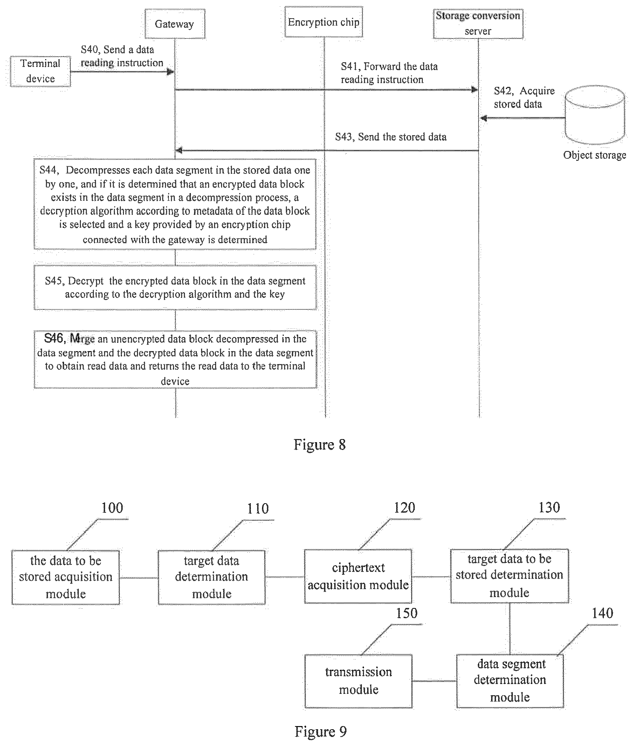

A signaling flow of a data reading method for a hybrid cloud in the embodiments of the present application is shown in Figure 8. The data reading method may be implemented based on the above-described data storage method. Referring to Figure 8, the signaling flow may include the following.

In S40, a terminal device in a private cloud sends a data reading instruction to a gateway in the private cloud.

In S41, the gateway forwards the data reading instruction to a public cloud.

In S42, a storage conversion server in the public cloud acquires stored data correspondingly stored in a storage device, the stored data including at least one data segment and the at least one data segment including a data block to be correspondingly read according to the data reading instruction and metadata corresponding to the data block.

In some embodiments, during data reading, the storage device reads data in form of data block.

In some embodiments, data blocks stored in the storage device (for example, an object storage) are represented by identification values (bno). In various embodiments of the present application, the data reading instruction may contain indication information about an identification value (bno) of the data block required to be read, so that the storage conversion server may acquire the corresponding value (data block) from the storage device according to the indication information about the identification value (bno) and may further acquire stored data of a data segment including the acquired data block and metadata corresponding to the data block from the storage device.

In S43, the storage conversion server sends the stored data to the gateway in the private cloud.

Therefore, the gateway in the private cloud may acquire the stored data in the public cloud.

In S44, the gateway in the private cloud decompresses each data segment in the stored data one by one, and if it is determined that an encrypted data block exists in the data segment in a decompression process, a decryption algorithm according to metadata of the data block is selected and a key provided by an encryption chip connected with the gateway is determined.

In some embodiments, when the encrypted data block exists in the data segment, the data block may be partially or completely encrypted, which may be indicated by the metadata of the data block.

In some embodiments, a partial decryption process for the data block may be an inverse process of a partial encryption process for the data block. If it is determined that part of a data block of a data segment is encrypted, in a decompression process of the data segment, a decryption algorithm may be selected according to an encryption algorithm recorded in metadata of the data segment, and a corresponding key provided by the encryption chip connected with the gateway may be acquired according to a key ID recorded in the metadata, so that the target data that is partially encrypted in the data block of the data segment may be decrypted according to the selected decryption algorithm and the acquired key, and an original position of the target data in the data block may be overwritten with the decrypted target data according to a corresponding block address offset to obtain a corresponding decrypted data block of the data segment.

For the condition that a data block of a data segment is completely encrypted, the whole data block of the data segment may be decrypted according to a decryption algorithm and key determined by metadata of the data segment to obtain a corresponding decrypted data block of the data segment.

In S45, the gateway decrypts the encrypted data block in the data segment according to the decryption algorithm and the key.

In some embodiments, a decryption operation may be implemented by the gateway.

In S46, the gateway merges an unencrypted data block decompressed in the data segment and the decrypted data block in the data segment to obtain read data and returns the read data to the terminal device.

It is to be noted that, for the condition that part or all of data to be stored is encrypted, data reading and storing may be considered as inverse processes and may refer to each other.

A data storage apparatus for a hybrid cloud in the embodiments of the present application will be introduced below. The data storage apparatus for the hybrid cloud described below may be considered as a program module required to be set in the gateway in the private cloud to implement the data storage method for the hybrid cloud in the embodiments of the present application. The contents of the data storage apparatus for the hybrid cloud described below and the above-described contents of the data storage method for the hybrid cloud may correspondingly refer to each other.

Figure 9 is a structure block diagram of a data storage apparatus for a hybrid cloud according to some embodiments of the present application. The data storage apparatus for the hybrid cloud may be applied to a gateway in a private cloud. Referring to Figure 9, the data storage apparatus for the hybrid cloud may include:
a data to be stored acquisition module 100, configured to acquire data to be stored;
a target data determination module 110, configured to determine data required to be encrypted in the data to be stored to obtain target data;
a ciphertext acquisition module 120, configured to acquire a first encrypted data after the target data is encrypted, wherein the target data being encrypted according to a key provided by an encryption chip connected with the gateway;
a target data to be stored determination module 130, configured to generate target data to be stored including the first encrypted data according to the first encrypted data;
a data segment determination module 140, configured to generate a data segment according to the target data to be stored; and
a transmission module 150, configured to transmit the data segment to a public cloud for storage.

In some embodiments, the target data determination module 110 is configured to determine the data required to be encrypted in the data to be stored to obtain the target data, specifically including:
determining a size of the data required to be encrypted in the data to be stored and determining a corresponding position of the data required to be encrypted in the data to be stored; and
determining the data required to be encrypted in the data to be stored according to the size and the position.

In some embodiments, the target data determination module 110 may determine a size recorded in a configuration table as the size of the data required to be encrypted in the data to be stored and determine a corresponding position recorded in the configuration table as the position of the data required to be encrypted in the data to be stored.

In some embodiments, the target data determination module 110 is configured to determine the corresponding position of the data required to be encrypted in the data to be stored, specifically including:
determining a corresponding block address offset of the data required to be encrypted in the data to be stored.

In some embodiments, the target data to be stored determination module 130 is configured to generate the target data to be stored including the first encrypted data according to the first encrypted data, specifically including:
overwriting an original position of the target data in the data to be stored with the first encrypted data according to the block address offset to obtain the target data to be stored.

In some embodiments, the ciphertext acquisition module 120 is configured to acquire the first encrypted data after the target data is encrypted, specifically including:
transmitting the target data to the connected encryption chip; and
acquiring the first encrypted data obtained after the encryption chip encrypts the target data according to the stored key.

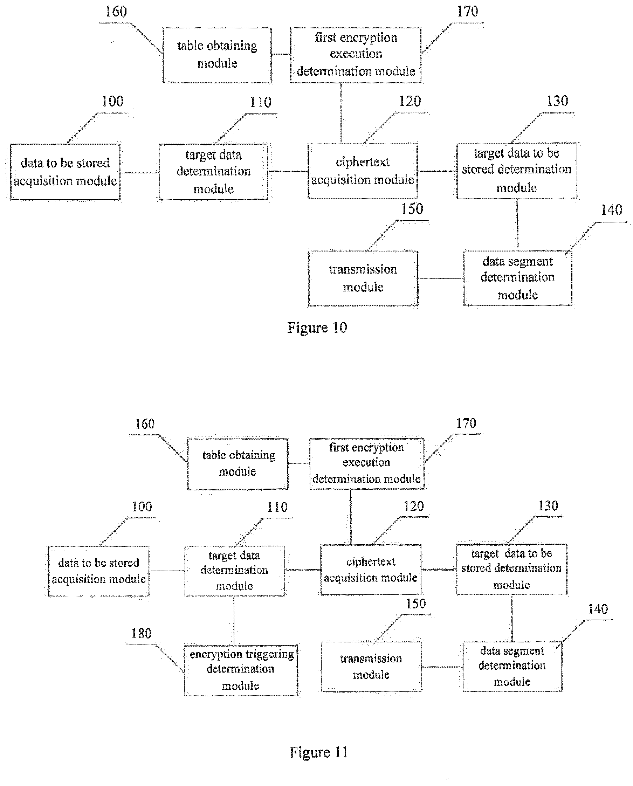

In some embodiments, Figure 10 is another structure block diagram of a data storage apparatus for a hybrid cloud according to some embodiments of the present application. As shown in Figure 9 and Figure 10, the apparatus may include:
a table obtaining module 160, configured to obtain the configuration table; and
a first encryption execution determination module 170, configured to, if the configuration table indicates that encryption is implemented by the encryption chip, the ciphertext acquisition module 120 is triggered to execute the process of transmitting the target data to the connected encryption chip.

In some embodiments, the configuration table also records at least one of the following contents:
indication information about whether the data to be stored is partially encrypted or completely encrypted;
the size of the data required to be encrypted in the data to be stored and the corresponding block address offset of the data required to be encrypted in the data to be stored;
a key ID for encryption of the encryption chip and indication information about an encryption algorithm;
a seed ID for generation of the key and indication information about an encryption algorithm when the gateway implements encryption by using the key provided by the encryption chip;
indication information about a compression algorithm; and
a read-write interval times that the gateway acquires the key from the encryption chip.

In some embodiments, the data storage apparatus may further be configured to:
if the configuration table indicates that part of the data to be stored is encrypted, the target data determination module 110 is triggered to execute the process of determining the data required to be encrypted in the data to be stored.

In some embodiments, the data storage apparatus may further be configured to:
if the configuration table indicates that all the data to be stored is encrypted, acquire a second encrypted data after the data to be stored is encrypted, wherein the data to be stored is encrypted according to a key provided by the encryption chip connected with the gateway; and a data segment is generated according to the second encrypted data and transmitted to the public cloud for storage.

In some embodiments, the data storage apparatus is configured to acquire the second encrypted data after the data to be stored is encrypted, specifically including:
acquiring the key provided by the encryption chip; and
encrypting the data to be stored according to the key to obtain the second encrypted data.

In some embodiments, the data storage apparatus is configured to acquire the key provided by the encryption chip, specifically including:
judging whether the key requested from the encryption chip last time is within a set life cycle or not;
if the key requested from the encryption chip last time is within the set life cycle, acquiring the key requested from the encryption chip last time; and
if the key requested form the encryption chip last time is not within the set life cycle, the encryption chip is requested for a key.

In some embodiments, the data segment determination module 140 is configured to generate the data segment according to the target data to be stored, specifically including:
determining metadata of the target data to be stored and merging the metadata and the target to-be-stored to generate the data segment.

In some embodiments, the metadata may include at least one of the following contents:
indication information about whether the data to be stored is a complete data block or not, the block address offset, a data length of the data to be stored, the indication information about whether the data to be stored is partially encrypted or completely encrypted, an internal offset of the ciphertext, a data length of the ciphertext, encryption manner indication information about whether the encryption chip or the gateway implements encryption, a key ID of the presently used key or a seed ID, the indication information about the encryption algorithm and the indication information about the compression algorithm.

In some embodiments, an address space of the data required to be encrypted before storage and a storage frequency of the data required to be encrypted before storage are also recorded in the configuration table. As shown in Figure 10 and Figure 11, the data storage apparatus for the hybrid cloud in the example as shown in Figure 11 may further include:
an encryption triggering determination module 180, configured to determine whether an address space of the acquired data to be stored corresponds to the address space recorded in the configuration table for the data required to be encrypted before storage or not; and determine whether the acquired data to be stored is required to be encrypted or not according to the storage frequency recorded in the configuration table for the data required to be encrypted before storage; and
if the address space of the acquired data to be stored corresponds to the address space recorded in the configuration table for the data required to be encrypted before storage; and it is determined, according to the storage frequency recorded in the configuration table for the data required to be encrypted before storage, that the acquired data to be stored is required to be encrypted, the target data determination module 110 is triggered to execute the process of determining the data required to be encrypted in the data to be stored.

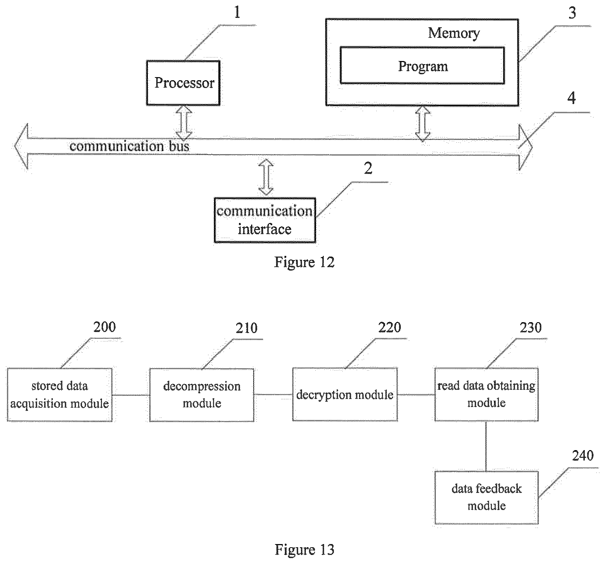

Various embodiments of the present application also provide a gateway in a private cloud. A hardware structure block diagram of the gateway is shown in Figure 12, including at least one processor 1, at least one communication interface 2, at least one memory 3 and at least one communication bus 4.

In various embodiments of the present application, the number of each of the processor 1, the communication interface 2, the memory 3 and the communication bus 4 is at least one, and the processor 1, the communication interface 2 and the memory 3 communicate with one another through the communication bus 4.

In some embodiments, the communication interface 2 may be an interface of a communication module, for example, an interface of a Global System for Mobile Communications (GSM) module.

The processor 1 may be a Central Processing Unit (CPU) or an Application Specific Integrated Circuit (ASIC), or is configured as one or more integrated circuits for implementing various embodiments of the present application.

The memory 3 may include a high-speed Random Access Memory (RAM), and may also include a non-volatile memory, for example, at least one disk memory.

The memory 3 stores a program, the processor 1 executes the program stored in the memory 3, and the program is specifically configured to:
acquire data to be stored;
determine data required to be encrypted in the data to be stored to obtain target data;
acquire a first encrypted data after the target data is encrypted, wherein the target data is encrypted according to a key provided by an encryption chip connected with the gateway;
generate target data to be stored including the first encrypted data according to the first encrypted data;
generate a data segment according to the target data to be stored; and
transmit the data segment to a public cloud for storage.

Some embodiments of the present application also provide a storage medium. A form of the storage medium may be, for example, a memory. The storage medium may be applied to a gateway in a private cloud. A program may be recorded in the storage medium, and the program may be configured to:
acquire data to be stored;
determine data required to be encrypted in the data to be stored to obtain target data;
acquire a first encrypted data after the target data is encrypted, wherein the target data is encrypted according to a key provided by an encryption chip connected with the gateway;
generate target data to be stored including the first encrypted data according to the first encrypted data;
generate a data segment according to the target data to be stored; and
transmit the data segment to a public cloud for storage.

In some embodiments, function detailing and function extension of the program may refer to the corresponding parts described above.

In some embodiments, various embodiments of the present application also provide an encryption chip, which may include at least one memory and at least one processor, wherein a program is stored in the memory, the processor executes the program, and the program is configured to:
acquire target data required to be encrypted in data to be stored transmitted by a gateway in a private cloud;
encrypt the target data according to a key to obtain a first encrypted data; and
output the first encrypted data to the gateway, so that the gateway determines data to be stored in a public cloud according to the first encrypted data.

Some embodiments of the present application also provide a data reading apparatus for a hybrid cloud. The data reading apparatus for the hybrid cloud may be considered as a program module required to be set by a gateway in a private cloud, to implement the data reading method for the hybrid cloud in the embodiments of the present application. The data reading apparatus for the hybrid cloud described below and the above-described data reading method for the hybrid cloud may correspondingly refer to each other.

Figure 13 is a structure block diagram of a data reading apparatus for a hybrid cloud according to some embodiments of the present application. The apparatus may be applied to a gateway in a private cloud. Referring to Figure 13, the data reading apparatus for the hybrid cloud may include:
a stored data acquisition module 200, configured to acquire stored data in a public cloud, wherein the stored data includes at least one data segment, the at least one data segment includes a data block required to be read and metadata corresponding to the data block;
a decompression module 210, configured to decompress each data segment in the stored data one by one, and if it is determined that an encrypted data block exists in the data segment in a decompression process, select a decryption algorithm according to metadata of the data block and determine a key provided by an encryption chip connected with the gateway;
a decryption module 220, configured to decrypt the encrypted data block in the data segment according to the decryption algorithm and the key;
a read data obtaining module 230, configured to merge an unencrypted data block in the decompressed data segment and the decrypted data block in the data segment to obtain read data; and
a data feedback module 240, configured to return the read data to a terminal device.

In some embodiments, the decryption module 220 is configured to decrypt the encrypted data block in the data segment according to the decryption algorithm and the key, specifically including:
if part of the data block of the data segment is encrypted, decrypting the part of the encrypted target data in the data block of the data segment and overwriting an original position of the target data in the data block with the decrypted target data according to a corresponding block address offset to obtain a corresponding decrypted data block.

In some embodiments, the above-described data reading apparatus for the hybrid cloud may be loaded in the gateway in the private cloud in form of a program module. Correspondingly, a structure of the gateway, as shown in Figure 12, may include at least one processor 1, at least one communication interface 2, at least one memory 3 and at least one communication bus 4.

The memory stores a program, the processor executes the program, and the program is configured to:
acquire the stored data in the public cloud, wherein the stored data includes the at least one data segment, the at least one data segment includes the data block required to be read and the metadata corresponding to the data block;
decompress each data segment in the stored data one by one, and if it is determined that the encrypted data block exists in the data segment in the decompression process, select the decryption algorithm according to the metadata of the data block and determine the key provided by the encryption chip connected with the gateway;
decrypt the encrypted data block in the data segment according to the decryption algorithm and the key;
merge the unencrypted data block in the decompressed data segment and the decrypted data block in the data segment to obtain the read data; and
return the read data to the terminal device.

In some embodiments, the present application also provides a cloud system. A structure of the cloud system, as shown in Figure 1, may include at least one terminal device, gateway and encryption chip connected with the gateway in a private cloud, as well as a storage conversion server and storage device in a public cloud,
wherein the gateway is configured to acquire data to be stored, determine data required to be encrypted in the data to be stored to obtain target data, acquire a first encrypted data after the target data is encrypted, the target data being encrypted according to a key provided by the encryption chip connected with the gateway, generate target data to be stored including the first encrypted data according to the first encrypted data, generate a data segment according to the target data to be stored and transmit the data segment to the public cloud for storage; and
the storage conversion server is configured to generate stored data according to the data segment and update the stored data to an object storage.

In some embodiments, the storage conversion server is configured to generate the stored data according to the data segment, specifically including:
if the data to be stored is a complete data block, merging the data segment and a specific stored data content to generate the stored data; and
if the data to be stored is not a complete data block, retrieving at least one original data segment corresponding to the data to be stored from the storage device, decompressing each retrieved original data segment one by one to obtain at least one original data block, merging the target data to be stored and the at least one original data block to obtain at least one data block required to be stored, compressing the at least one data block required to be stored, merging compressed data and the metadata to form the data segment and merging the formed data segment and the specific stored data content to generate the stored data.

In some embodiments, the storage conversion server is configured to merge the target data to be stored and the at least one original data block to obtain the at least one data block required to be stored, specifically including:
judging whether encrypted data intersection exists between the original data block and the target data to be stored or not;
if the encrypted data intersection exists, keeping the original data block with encrypted data intersection with the target data to be stored independent, merging the original data block without encrypted data intersection with the target data to be stored and the target data to be stored, and integrating the independent original data block and the merged data block to obtain the data block required to be stored; and

Otherwise, merging the original data block and the target data to be stored to obtain the data block required to be stored.

In some embodiments, the gateway is further configured to acquire stored data in the public cloud, the stored data including at least one data segment and the at least one data segment including a data block required to be read and metadata corresponding to the data block; decompress each data segment in the stored data one by one, and if it is determined that an encrypted data block exists in the data segment in a decompression process, select a decryption algorithm according to metadata of the data block and determine a key provided by the encryption chip connected with the gateway; decrypt the encrypted data block in the data segment according to the decryption algorithm and the key; merge an unencrypted data block in the decompressed data segment and the decrypted data block in the data segment to obtain read data; and return the read data to a terminal device.

According to various embodiments of the present application, part or all of the data to be stored may be encrypted by using the key provided by the encryption chip connected with the gateway in the private cloud to store the data including the ciphertext obtained by encryption in the public cloud. Since the target data to be stored includes the ciphertext obtained by encryption with the key provided by the encryption chip, and the key for encryption is stored by the encryption chip, so that the key leakage risk is extremely low, the data leakage risk under the conditions that a cloud manager leaks the data, the public cloud is attacked by a hacker and the like may be reduced, and the security of the data, stored in the public cloud, of the private cloud is improved.

Each embodiment in the specification is progressively described, differences with the other embodiments are mainly described in each embodiment, and the same or similar parts of each embodiment may refer to one another. The apparatus disclosed in the embodiments corresponds to the method disclosed in the embodiments and thus is described simply, and the related parts may refer to the descriptions about the corresponding parts of the method.

Those skilled in the art may further realize that the units and algorithm blocks of each example described in combination with the embodiments disclosed herein may be implemented by electronic hardware, computer software or a combination of the two. For clearly describing interchangeability of hardware and software, the composition and blocks of each example have been generally described above according to functions. Whether these functions are executed in through the hardware or the software depends on specific applications and design constraints of the technical solutions. Those skilled in the art may realize the described functions for each specific application by virtue of different methods, but such realization shall fall within the scope of the present application.

The blocks of the method or algorithm described in combination with the embodiments disclosed herein may be directly implemented by use of hardware, a software module executed by a processor or a combination of the two. The software module may be arranged in a RAM, a memory, a Read-Only Memory (ROM), an electrically programmable ROM, an electrically erasable programmable ROM, a register, a hard disk, a removable disk, a Compact Disc Read-Only Memory (CD-ROM) or any other known storage medium in the technical field.

Through the above descriptions about the disclosed embodiments, those skilled in the art may implement or use the present application. Various modifications to these embodiments are apparent to those skilled in the art and general principles defined herein may be implemented in other embodiments without departing from the core concept or scope of the present application. Therefore, the present application is not limited to these embodiments presented herein but consistent with the widest scope consistent with the principles and novel features disclosed herein. The invention is defined by the appended claims.

## Claims

1. A hybrid-cloud data storage method, executed by a gateway in a private cloud, wherein the private cloud is a cloud environment exclusive to specific users for security, the private cloud comprises an encryption chip connected with the gateway, and the encryption chip stores a key for data encryption, the hybrid-cloud data storage method comprising:
receiving (S10) a data storage instruction from a terminal device in the private cloud, wherein the data storage instruction includes data to be stored in a public cloud;
acquiring (S11) the data to be stored;
determining (S210) whether an encryption chip or the gateway implements encryption;
if the encryption is implemented by the encryption chip, determining (S220) data required to be encrypted in the data to be stored to obtain first target data, transmitting (S230) the first target data to the encryption chip to acquire a first encrypted data obtained after the encryption chip encrypts the first target data according to the stored key, generating (204) second target data including the first encrypted data according to the first encrypted data, generating (205) a data segment corresponding to the second target data according to the second target data, and transmitting (206) the data segment corresponding to the second target data to the public cloud for storage; and
if the encryption is implemented by the gateway, encrypting (S260) the data to be stored according to the key provided by the encryption chip within a set life cycle to obtain a second encrypted data, wherein the set life cycle is kept for the key, after requesting the encryption chip for the key once, a new key from the encryption chip is requested only after the set life cycle of the last stored key in the gateway is exceeded, generating (S270) a data segment corresponding to the second encrypted data according to the second encrypted data, and transmitting (S270) the data segment corresponding to the second encrypted data to the public cloud for storage.

2. The hybrid-cloud data storage method of claim 1, wherein the determining the data required to be encrypted in the data to be stored to obtain the first target data comprises:
determining (S22) size of the data required to be encrypted in the data to be stored; determining (S22) a corresponding position of the data required to be encrypted in the data to be stored;
determining (S22) the data required to be encrypted in the data to be stored according to the size and the position;
determining the data required to be encrypted as the first target data.

3. The hybrid-cloud data storage method of claim 2, wherein the determining the corresponding position of the data required to be encrypted in the data to be stored comprises:
determining a corresponding block address offset of the data required to be encrypted within the data to be stored; and
generating the second target data including the first encrypted data according to the first encrypted data comprises:
overwriting an original position of the first target data in the data to be stored with the first encrypted data according to the block address offset to obtain the second target data.

4. The hybrid-cloud data storage method of claim 2, further comprising:
obtaining a configuration table, wherein the configuration table records encryption manner indication information, the encryption manner indication information indicates whether the encryption chip or the gateway implements the encryption;
when the encryption manner indication information recorded in the configuration table indicates that encryption is implemented by the encryption chip, performing the process of determining data required to be encrypted in the data to be stored.

5. The hybrid-cloud data storage method of claim 4, wherein the determining the size of the data required to be encrypted in the data to be stored comprises:
determining size recorded in the configuration table as the size of the data required to be encrypted in the data to be stored; and
the determining the corresponding position of the data required to be encrypted in the data to be stored comprises:
determining a corresponding position recorded in the configuration table as the position of the part of data required to be encrypted in the data to be stored.

6. The hybrid-cloud data storage method of claim 1, further comprising:
determining whether an address space of the acquired data to be stored corresponds to an address space recorded in a configuration table for data required to be encrypted before storage;
determining whether the acquired data to be stored is required to be encrypted or not according to a storage frequency recorded in the configuration table for the data required to be encrypted before storage; and
if both determining results are yes, performing the process of determining the data required to be encrypted in the data to be stored.

7. A gateway, **characterized by**, comprising a memory and a processor, wherein the memory stores a program, when executed by the processor, implements the method of any one of claims 1-6.

## Patentansprüche

1. Hybrid-Cloud-Datenspeicherverfahren, das von einem Gateway in einer privaten Cloud ausgeführt wird, wobei die private Cloud eine Cloud-Umgebung ist, die aus Sicherheitsgründen nur für bestimmte Benutzer zugänglich ist, die private Cloud einen Verschlüsselungschip umfasst, der mit dem Gateway verbunden ist, und der Verschlüsselungschip einen Schlüssel für die Datenverschlüsselung speichert, wobei das Hybrid-Cloud-Datenspeicherverfahren umfasst:
Empfangen (S10) einer Datenspeicheranweisung von einem Endgerät in der privaten Cloud, wobei die Datenspeicheranweisung Daten enthält, die in einer öffentlichen Cloud zu speichern sind;
Erfassen (S11) der zu speichernden Daten;
Bestimmen (S210), ob ein Verschlüsselungschip oder das Gateway eine Verschlüsselung implementiert;
wenn die Verschlüsselung durch den Verschlüsselungschip implementiert wird, Bestimmen (S220) von Daten, die in den zu speichernden Daten verschlüsselt werden müssen, um erste Zieldaten zu erhalten, Senden (S230) der ersten Zieldaten an den Verschlüsselungschip, um erste verschlüsselte Daten zu erhalten, die erhalten werden, nachdem der Verschlüsselungschip die ersten Zieldaten gemäß dem gespeicherten Schlüssel verschlüsselt hat, Erzeugen (204) zweiter Zieldaten, die die ersten verschlüsselten Daten gemäß den ersten verschlüsselten Daten enthalten, Erzeugen (205) eines Datensegments, das den zweiten Zieldaten entspricht, gemäß den zweiten Zieldaten, und Senden (206) des Datensegments, das den zweiten Zieldaten entspricht, an die öffentliche Cloud zur Speicherung; und
wenn die Verschlüsselung durch das Gateway implementiert wird, Verschlüsseln (S260) der zu speichernden Daten gemäß dem von dem Verschlüsselungschip bereitgestellten Schlüssel innerhalb eines eingestellten Lebenszyklus, um zweite verschlüsselte Daten zu erhalten, wobei der eingestellte Lebenszyklus für den Schlüssel beibehalten wird, nachdem der Verschlüsselungschip einmal um den Schlüssel gefragt wurde, ein neuer Schlüssel von dem Verschlüsselungschip erst angefordert wird, nachdem der eingestellte Lebenszyklus des letzten gespeicherten Schlüssels in dem Gateway überschritten ist, Erzeugen (S270) eines Datensegments, das den zweiten verschlüsselten Daten entspricht, gemäß den zweiten verschlüsselten Daten, und Senden (S270) des Datensegments, das den zweiten verschlüsselten Daten entspricht, an die öffentliche Cloud zur Speicherung.

2. Hybrid-Cloud-Datenspeicherverfahren nach Anspruch 1, wobei das Bestimmen der Daten, die in den zu speichernden Daten verschlüsselt werden müssen, um die ersten Zieldaten zu erhalten, umfasst:
Bestimmen (S22) einer Größe der Daten, die in den zu speichernden Daten verschlüsselt werden sollen;
Bestimmen (S22) einer entsprechenden Position der Daten, die in den zu speichernden Daten verschlüsselt werden sollen;
Bestimmen (S22) der Daten, die in den zu speichernden Daten verschlüsselt werden sollen, entsprechend der Größe und der Position;
Bestimmen der zu verschlüsselnden Daten als die ersten Zieldaten.

3. Hybrid-Cloud-Datenspeicherverfahren nach Anspruch 2, wobei das Bestimmen der entsprechenden Position der zu verschlüsselnden Daten in den zu speichernden Daten umfasst
Bestimmen eines entsprechenden Blockadressen-Offsets der zu verschlüsselnden Daten innerhalb der zu speichernden Daten; und
Erzeugen der zweiten Zieldaten, die die ersten verschlüsselten Daten enthalten, gemäß den ersten verschlüsselten Daten, umfassend: Überschreiben einer ursprünglichen Position der ersten verschlüsselten Daten
Überschreiben einer ursprünglichen Position der ersten Zieldaten in den zu speichernden Daten mit den ersten verschlüsselten Daten gemäß dem Blockadressen-Offset, um die zweiten Zieldaten zu erhalten.

4. Hybrid-Cloud-Datenspeicherverfahren nach Anspruch 2, das ferner umfasst:
Erhalten einer Konfigurationstabelle, wobei die Konfigurationstabelle Verschlüsselungsart-Anzeigeinformationen aufzeichnet, wobei die Verschlüsselungsart-Anzeigeinformationen anzeigen, ob der Verschlüsselungschip oder das Gateway die Verschlüsselung implementiert;
wenn die in der Konfigurationstabelle aufgezeichnete Verschlüsselungsart-Anzeigeinformation anzeigt, dass die Verschlüsselung durch den Verschlüsselungschip implementiert wird, Durchführen des Prozesses der Bestimmung von Daten, die in den zu speichernden Daten verschlüsselt werden müssen.

5. Hybrid-Cloud-Datenspeicherverfahren nach Anspruch 4, wobei das Bestimmen der Größe der Daten, die in den zu speichernden Daten verschlüsselt werden müssen, umfasst:
Bestimmen von in der Konfigurationstabelle aufgezeichneter Größe als die Größe der Daten, die in den zu speichernden Daten verschlüsselt werden sollen; und
das Bestimmen der entsprechenden Position der Daten, die in den zu speichernden Daten verschlüsselt werden sollen, umfassend
Bestimmen einer entsprechenden Position, die in der Konfigurationstabelle als die Position des Teils der Daten aufgezeichnet ist, die in den zu speichernden Daten verschlüsselt werden sollen.

6. Hybrid-Cloud-Datenspeicherverfahren nach Anspruch 1, das ferner umfasst:
Bestimmen, ob ein Adressraum der zu speichernden erfassten Daten einem Adressraum entspricht, der in einer Konfigurationstabelle für Daten aufgezeichnet ist, die vor der Speicherung verschlüsselt werden müssen;
Bestimmen, ob die erfassten, zu speichernden Daten verschlüsselt werden müssen oder nicht, gemäß einer Speicherhäufigkeit, die in der Konfigurationstabelle für die Daten aufgezeichnet ist, die vor der Speicherung verschlüsselt werden müssen; und
wenn beide Bestimmungsergebnisse "ja" sind, Ausführen des Prozesses der Bestimmung der Daten, die in den zu speichernden Daten verschlüsselt werden müssen.

7. Gateway, **dadurch gekennzeichnet, dass** es einen Speicher und einen Prozessor umfasst, wobei der Speicher ein Programm speichert, das, wenn es von dem Prozessor ausgeführt wird, das Verfahren nach einem der Ansprüche 1-6 implementiert.

## Revendications

1. Procédé de stockage de données en nuage hybride, exécuté par une passerelle dans un nuage privé, dans lequel le nuage privé est un environnement en nuage réservé à des utilisateurs spécifiques pour la sécurité, le nuage privé comprend une puce de chiffrement connectée à la passerelle, et la puce de chiffrement stocke une clé pour le chiffrement de données, le procédé de stockage de données en nuage hybride consiste à:
recevoir (S10) une instruction de stockage de données provenant d'un dispositif terminal dans le nuage privé, dans lequel l'instruction de stockage de données comprenant des données à stocker dans un nuage public;
acquérir (511) les données à stocker;
déterminer (S210) si une puce de chiffrement ou la passerelle met en oeuvre le chiffrement;
si le chiffrement est mis en oeuvre par la puce de chiffrement, déterminer (S220) des données devant être chiffrées dans les données à stocker pour obtenir des premières données cibles, transmettre (S230) les premières données cibles à la puce de chiffrement pour acquérir des premières données chiffrées obtenues après que la puce de chiffrement chiffre les premières données cibles selon la clé stockée, générer (204) des secondes données cibles contenant les premières données chiffrées selon les premières données chiffrées, générer (205) un segment de données correspondant aux secondes données cibles selon les secondes données cibles, et transmettre (206) le segment de données correspondant aux secondes données cibles au nuage public pour stockage; et
si le chiffrement est mis en oeuvre par la passerelle, chiffrer (S260) les données à stocker selon la clé fournie par la puce de chiffrement dans un cycle de vie défini pour obtenir des secondes données chiffrées, dans lequel le cycle de vie défini est conservée pour la clé, après avoir demandé la puce de chiffrement pour la clé une fois, une nouvelle clé provenant de la puce de chiffrement est demandée uniquement après le cycle de vis définie de la dernière clé stockée dans la passerelle a expiré, générer (S270) un segment de données correspondant aux secondes données chiffrées selon les secondes données chiffrées, et transmettre (S270) le segment de données correspondant aux secondes données chiffrées au nuage public pour stockage.

2. Procédé de stockage de données en nuage hybride selon la revendication 1, dans lequel la détermination des données devant être chiffrées dans les données à stocker pour obtenir les premières données cibles consiste à:
déterminer (S22) la taille des données devant être chiffrées dans les données à stocker; déterminer (S22) une position correspondante des données devant être chiffrées dans les données à stocker;
déterminer (S22) les données devant être chiffrées dans les données à stocker selon la taille et la position;
déterminer les données devant être chiffrées en tant que premières données cibles.

3. Procédé de stockage de données en nuage hybride selon la revendication 2, dans lequel la détermination de la position correspondante des données devant être chiffrées dans les données à stocker consiste à:
déterminer un décalage d'adresse de bloc correspondant des données devant être chiffrées dans les données à stocker; et
la génération des secondes données cibles contenant les premières données chiffrées selon les premières données chiffrées consiste à:
écraser une position d'origine des premières données cibles dans les données à stocker par les premières données chiffrées selon le décalage d'adresse de bloc pour obtenir les secondes données cibles.

4. Procédé de stockage de données en nuage hybride selon la revendication 2, consistant en outre:
obtenir une table de configuration, la table de configuration enregistrant des informations d'indication de manière de chiffrer, les informations d'indication de manière de chiffrer indiquant si la puce de chiffrement ou la passerelle met en oeuvre le chiffrement;
lorsque les informations d'indication de manière de chiffrer enregistrées dans la table de configuration indiquent que le chiffrement est mis en oeuvre par la puce de chiffrement, effectuer le processus de détermination de données devant être chiffrées dans les données à stocker.

5. Procédé de stockage de données en nuage hybride selon la revendication 4, dans lequel la détermination de la taille des données devant être chiffrées dans les données à stocker consiste à:
déterminer un décalage d'adresse de bloc correspondant des données devant être chiffrées dans les données à stocker; et
la détermination de la position correspondante des données devant être chiffrées dans les données à stocker consiste à:
déterminer une position correspondante enregistrée dans la table de configuration en tant que position de la partie des données devant être chiffrées dans les données à stocker.

6. Procédé de stockage de données en nuage hybride selon la revendication 1, consistant en outre à:
déterminer si un espace d'adresse des données acquises à stocker correspond à un espace d'adresse enregistré dans une table de configuration pour les données devant être chiffrées avant le stockage;
déterminer s'il est nécessaire ou non que les données acquises à stocker doivent être chiffrées selon une fréquence de stockage enregistrée dans la table de configuration pour les données devant être chiffrées avant le stockage; et
si les deux résultats de détermination sont affirmatifs; effectuer le processus de détermination des données devant être chiffrées dans les données à stocker.

7. Passerelle, **caractérisée en ce qu'**elle comprend une mémoire et un processus, dans laquelle la mémoire stocke un programme, lorsqu'il est exécuté par le processeur, met en oeuvre le procédé selon l'une quelconque des revendications 1 à 6.
